(19) Europäisches Patentamt
European Patent Office
Office européen des brevets

(11) **EP 2 270 962 B1**

## (12) EUROPEAN PATENT SPECIFICATION

(45) Date of publication and mention
of the grant of the patent:
**22.12.2021 Bulletin 2021/51**

(21) Application number: **09771645.0**

(22) Date of filing: **16.06.2009**

(51) Int Cl.:
**H02K 17/14** *(2006.01)*      **H02K 3/28** *(2006.01)*
**H02K 17/16** *(2006.01)*      **H02K 3/12** *(2006.01)*

(86) International application number:
**PCT/CN2009/072293**

(87) International publication number:
**WO 2010/108341 (30.09.2010 Gazette 2010/39)**

(54) **WOUND ROTOR BRUSHLESS DOUBLY-FED MOTOR**

BÜRSTENLOSER DOPPELT ANGETRIEBENER MOTOR FÜR EINEN WICKELROTOR

MOTEUR SANS BALAIS À ROTOR BOBINÉ ET À DOUBLE ALIMENTATION

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **27.03.2009 CN 200910061297**

(43) Date of publication of application:
**05.01.2011 Bulletin 2011/01**

(73) Proprietors:
• **Huazhong University of Science and Technology
Wuhan City
Hubei 430074 (CN)**
• **China Changjiang National Shipping Group
Motor
Factory
Jiangxia District Wuhan
Hubei 430205 (CN)**

(72) Inventors:
• **WANG, Xuefan
Wuhan, Hubai 430074 (CN)**
• **SHU, Dixian
Wuhan, Hubai 430205 (CN)**

(74) Representative: **Zeuner Summerer Stütz
Patent- und Rechtsanwälte
Partnerschaft
Nußbaumstraße 8
80336 München (DE)**

(56) References cited:
**EP-A2- 0 700 143**      **WO-A1-2007/129821**
**CN-A- 1 378 326**      **CN-A- 1 972 087**
**CN-A- 101 039 057**      **CN-A- 101 039 057**
**GB-A- 673 691**      **JP-A- 2002 247 816**
**US-A- 5 811 905**

• **YOUGUANG GUO ET AL: "Development of a
Wound Rotor Brushless Doubly Fed Machine
Based on Slot MMF Harmonics", INDUSTRY
APPLICATIONS SOCIETY ANNUAL MEETING,
2008. IAS '08. IEEE, IEEE, PISCATAWAY, NJ,
USA, 5 October 2008 (2008-10-05), pages 1-5,
XP031353804, ISBN: 978-1-4244-2278-4**

**Description**

**Field of the Invention**

This invention falls into motor technology field. Specifically, it involves a type of AC brushless double feed motor designed based on rotor winding slot harmonics magnetomotive force.

**Background of the Invention**

It's well known for the technicians in this technical field that, AC brushless double feed motor is appropriate frequency control system, featured by reliable operation and small capacity of inverter demand, etc. The stator of this type of motor, is equipped with two sets of windings, the number of pole pairs of one is P1 (in mathtype formulas written as $p_1$), that of the other is P2 (in mathtype formulas written as $p_2$). when windings of stator P1 is power-on, revolving magnetic field with P1 pole pairs is generated. the induced current of rotor will generate P2 pole pairs of magnetic field besides P1 pole pairs of magnetic field. Relative to rotor, the revolving direction of both pole pairs of magnetic field is inversed, when connecting variable-frequency power sources to stator P2 windings, change the frequency of variable-frequency power source, the speed of motor can be changed.

"Principle of brushless double feed frequency control motor and application future in auxiliary engine dragging in plant" (Journal of Electrotechnics, Vol 1, 2002, pp.7-10) introduces the working principle of brushless double feed frequency control motor and some problems in existing brushless double feed speed control system.

The key of better performance of brushless double feed frequency control motor is rotor. There are two types of structures of rotor in recent researches, one is reluctor, the other is cage type short-circuit winding rotor. Because the iron core of reluctor rotor must be in form of projecting pole, and windings of cage type short-circuit windings must be in form of concentric type short-circuit windings, with these restrictions, both types of rotor can only be applicable to certain number of poles, and performance of them is greatly lower than the rotor common AC motor, with larger volume as well.

AC brushless double feed motor can operate as generator, used in wind energy or water power, and the like fields need speed control and constant-frequency output.

Document CN 101 039 057 A discloses an ac brushless double-fed motor. The article Youguang Guo et al: "Development of a Wound Rotor Brushless Doubly Fed Machine Based on Slot MMF Harmonics", Industry Applications Society Annual Meeting, 2008. IAS '08, IEEE, Piscataway, NJ, USA, 5 October 2008 (2008-10-05), pages 1-5, discusses the development of a would rotor brushless doubly fed machine

**Summary of the Invention**

The objective of this invention is to overcome existing technical defects, and provide a type of AC brushless double feed motor whose rotor windings rotates inversely with the occurrence of slot harmonics and fundamental wave of magnetic force of windings.

To realize above objective, the invention provides the motor of claim 1.

The motor rotor windings in this invention contains reversely connected coils, number of them is less than $nm_k$, the span of each coil is equivalent, the coil with neighboring slot number in phase winding will short circuit connected after they are connected in series.

The section of motor rotor slot is designed by principle of equivalent full rate of conductor slots, when unequal turn coils are applied or equal turn coils are applied but number of coils is less than $nm_k$, the rotor becomes uneven slot form with varying sections.

The basis of this invention is theory on "slot harmonics" magnetic force in AC motor. It should be pointed out that, the " slot harmonics" hereafter means slot harmonics magnetic force generated when rotor windings are with current, this is different from the reluctor brushless double feed motor in principle that, the latter influences the density distribution of air gap to generate harmonics via variation of magnetoresistance of rotor iron core round. The principle of this invention is detailed as in the following.

For real AC motor, the winding coils are embedded in surface slot of iron core. Thus, the winding coil conductor is not distributed by ideal sine law along the surfacing round of iron core. According to AC motor winding relevant theory, for m-phase symmetrical winding coil with P1 pole pairs, in addition to generating P1 pole pairs of fundamental wave magnetic force, it will also generate $v = Z/P1 \pm 1$, i.e. slot harmonics magnetic force with number of pole pairs of $P2 = Z \pm P1$.

This type of slot harmonics magnetic force has the following both characteristics:

1) harmonic magnetic force winding factor is equivalent with fundamental magnetic winding factor This point can be easily proved. Take windings with integral slots as an example, for v harmonics, the common winding factor is expressed in $k_{dyv} = k_{dv} k_{yv}$, in which

$$k_{dv} = \frac{\sin v \dfrac{q\alpha}{2}}{q \sin \dfrac{v\alpha}{2}}$$

$$k_{yv} = \sin v \frac{y\pi}{2\tau}$$

In above both equations, $\alpha = 2p_1\pi / Z$ , $\tau = Z /(2p_1)$ , $q = Z / 2mp_1$, $y$ means the pitch of coil, indicated by number of slots. Substitute the harmonic number $v = 2mq \pm 1$ in above both equation, we obtain

$$k_{dv} = \frac{\sin v \dfrac{q\alpha}{2}}{q \sin \dfrac{v\alpha}{2}} = \frac{\sin(2mq \pm 1)\dfrac{q\alpha}{2}}{q \sin \dfrac{(2mq \pm 1)\alpha}{2}} = \frac{\sin(q\pi \pm \dfrac{q\alpha}{2})}{q \sin(\pi \pm \dfrac{\alpha}{2})} = \pm k_{d1}$$

$$k_{yv} = \sin v \frac{y\pi}{2\tau} = \sin(2mq \pm 1)\frac{y\pi}{2\tau} = \sin(y\pi \pm \frac{y\pi}{2\tau}) = \pm k_{y1}$$

i.e., $k_{dyv} = k_{d1}k_{y1} = k_{dy1}$ , $k_{dy1}$ is winding factor corresponding to fundamental wave. This expression indicates that slot harmonics magnetic force winding factor is equivalent to fundamental wave magnetic force winding factor.
2) lower order slot harmonics magnetic force is inversed to revolving direction of fundamental wave magnetic force

In general, slot harmonics appears in pair, for example, first-order slot harmonics $v=2mq \pm 1$ , in which, number of pole pairs of corresponding number $v=2mq$ -1, $P2= Z - P1$, which is lower than number of pole pair $P2 = Z + P1$ corresponding to number $v =2mq$ +1 , thus it is called low-order slot harmonics. We take the three phase symmetrical integral slot winding as an example to analyze the revolving direction of magnetic force.
For harmonics magnetic force of three phase symmetrical winding, the magnetic force of each phase of winding is

$$f_{Av} = F_{\phi v} \cos v\theta \cos \omega t$$

$$f_{Bv} = F_{\phi v} \cos v(\theta - \frac{2}{3}\pi) \cos(\omega t - \frac{2}{3}\pi)$$

$$f_{Cv} = F_{\phi v} \cos v(\theta - \frac{4}{3}\pi) \cos(\omega t - \frac{4}{3}\pi)$$

In above three expressions, let $v$ =1 , we can induce that the three phase fundamental composed magnetic force $f_1(t,\theta) = \frac{3}{2} F_{\phi 1} \cos(\omega t - \theta)$ ; let $v$ =2mq -1 , in like manner can induce three phase slot harmonics composed magnetic force $f_v(t,\theta) = \frac{3}{2} F_{\phi v} \cos(\omega t + (2mq - 1)\theta)$ , comparing above both expressions we can know that, corresponding to v=2mq -1 , the revolving direction of slot harmonics magnetic force whose number of pole pairs $P2= Z - P1$ is contrary to revolving direction of fundamental wave revolving magnetic force whose number of pole pairs is $P1$, in like manner can prove the revolving direction of slot harmonics magnetic force whose number of pole pairs $P2= Z + P1$ is the same as revolving direction of fundamental revolving magnetic force whose number of pole pairs is $P1$.
Above both characteristics of slot harmonics theory provide design basis for the structure of rotor winding.

According to the principle of brushless double feed motor, it's required that the rotor winding can produce two revolving magnetic force at the same time, i.e., *P1 and P2,* and the revolving direction of both magnetic force with both pole pairs is contrary. As for this requirement, first determine the number of pole pairs p1 of required power winding, then select the number of pole pair P2 of control winding, and inverse the slot harmonics expression *P2= Z - P1* as above, i.e., under the precondition of satisfying symmetry of rotor winding, select the number of slot of rotor Z should satisfy *P2= Z -P1.* In such a way, the obtained rotor winding can satisfy the symmetry condition for number of pole P1 and *P2,* and generate both revolving magnetic force with both number of pole pairs, and can guarantee the revolving directions are contrary, then the number of phases of rotor winding $m = Z / m_k = (p_1 + p_2) / m_k$ ($m_k$=1 , when Z is odd ;mk= 2 , when *Z* is even) , the number of coils of each phase of winding is $m_k$.

Obviously, according to above expression *P1= Z - P2,* it's easily to obtain the number of pole pairs P1 and P2 is slot harmonics mutually; and according to the principle that slot harmonics winding factor is equivalent to fundamental wave winding factor, for rotor windings used for brushless double feed motor, only design high winding factor for number of pole pair P1, then another number of pole pairs P2will automatically has high winding factor.

According to above statement, we can obtain required slot harmonics rotor winding. However, in the magnetic force generated by such rotor windings, beside useful slot harmonics with number of pole pairs P1 and P2, there are higher order of slot harmonics whose order $v = 2mkq \pm 1$ ( *k*=1 ,2 ,3 ,... positive integer ), in there slot harmonics, particular the lower order slot harmonics, will greatly influence the amplitude of harmonic magnetic force with number of pole pairs PI and P2, which will greatly influence the performance of brushless double feed motor, so they must be weakened as possibly as to decrease their influence. According principle of electronic machinery, increase number of slot of rotor to increase rotor winding distribution effect, is an effective method to weaken high-order harmonics. To guarantee the symmetry of magnetic force with number of pole pairs P1 andP2, number of slots of rotor should be increased by integral multiple of $Z = p_1 + p_2$ , i.e., new number of slots of rotor Z' should satisfy the expression $Z' = nZ = n(p_1 + p_2)$ ( *n*=1 ,2 ,3 ,... positive integer ), when the number of phases of rotor winding is still $m = Z / m_k$ , but number of coils of each phase is $nm_k$ , the connection mode can be determined by above analysis that, connect the coils in series whose number of slot is neighboring, then connect them in self-short-circuit manner.

However, on the other hand, such distribution effect will inevitably weaken useful first-order slot harmonics. To guarantee the better performance of such brushless double feed motor, we must manage to enlarge the amplitude of first-order slot harmonics magnetic force generated by rotor windings, while the lessen the amplitude of other high-order slot harmonics magnetic force as possibly as.

It should be noted that, if all rotor slots are distributed evenly around rotor round, after the number of slots is increased, and equivalent-span coils are used, at this time, the induced potential generated by some coils of each phase of windings always be counteracted. To make sure rotor windings can generate powerful first-order slot harmonics magnetic force, we must remove some coils, as for which coils are removed, please refer to above statements, the rule is that the amplitude of magnetic force with pole pair number P1 and P2 is maximum, while contents of other high-order slot harmonics is minimum, determined by analysis results of winding magnetic slot harmonics.

It's an importance feature of this invention to use winding rotor winding composed of multiturn coils. The advantage is that not only the span of winding coil can be changed flexibly, the turns of each coil can be different, in order to lessen high-order slot harmonics as possibly as.

**Description of the Drawings**

Figure 1 Example not according to this invention, when *a)* Z=6 , *P1*=4 slot number phase diagram ; b) *P1*=4 three phase slot number distribution diagram;

Figure 2 Example not according to this invention, when *a)* Z=6 , *P2*=2 slot number phase diagram ; *b)* P2=2 three phase slot number distribution diagram;

Figure 3 Example not according to this invention, when Z=6 ,*P1/P2*=4/2 , three phase winding rotor winding wiring diagram ;

Figure 4 Example not according to this invention, when Z=54 , P2=2 three phase slot number phase distribution diagram;

Figure 5 Example not according to this invention, when Z=54 , *P1*=4 slot number phase diagram and three phase slot number phase distribution diagram;

Figure 6 Example not according to this invention, when Z=54 , *P1/P2*=4/2 , three phase winding rotor winding wiring diagram after some coils are removed ;

Figure 7 In this invention, when Z=54 , *P1/P2*=4/2 , *y*=7 unequal-turn coil winding rotor winding wiring diagram;

Figure 8 Example not according to this invention, showing a Z=54 , *P1/P2*=4/2 , *y*=7 wiring diagram for winding rotor winding with reversed coils;

## Specific Embodiments

We demonstrate this invention in the following.

There is a slot harmonics brushless double feed motor rotor, its number of pole pairs of power winding is P1=4, select number of pole pairs of control winding $P2$=2 , select number of slots of rotor $Z$=$P1$+ $P2$ = 6 according to $Z$= $P1$+ $P2$ , according to relational expression $m = Z / m_k = (p_1 + p_2) / m_k$ ($m_k$=1 , when Z is odd ; $m_k$=2 , when $Z$ is even) , we can obtain number of phases of rotor winding $m$=$Z/m_k$=6/2=3.

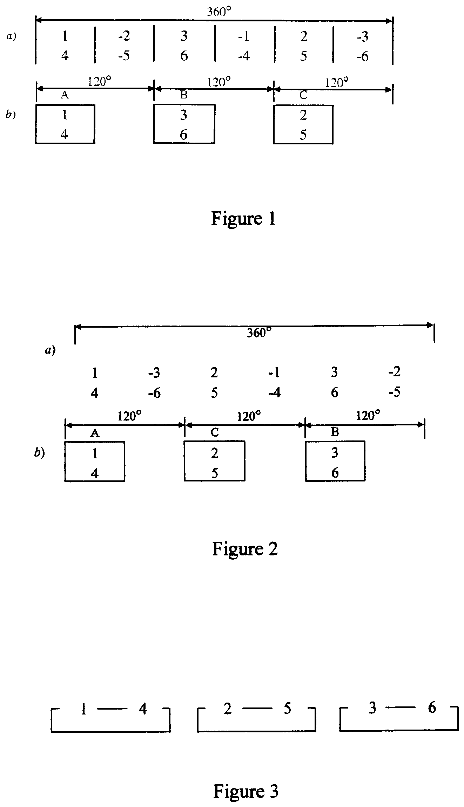

For $Z$=6 , $P1$=4 , $P2$=2 , $m$=3 rotor winding, if you want to obtain detailed wiring manner, can draw the slot number phase diagram, as shown in figure 1a), accordingly, then determine the slot number distribution of each phase is shown in figure 1b) , from which we can see that, at this time, for $P1$=4 is three phase winding, if span of coil is determined $y$=1 , then phase winding distribution coefficient is $1$ ; while for $P2$=2 , refer to figure 2 , figure 2$a$) is slot number phase diagram for $P2$=2 , figure 2$b$) is three phase slot number when $P2$=4 phase redistribution diagram as $P2$=2, from which we can see that, at this time $P2$=2 is also three phase winding, the phase winding coefficient is also $1$. this point is consistent with the statement of "slot harmonics" theory.

Comparing figure 1$b$) and figure 2$b$) we can see that, when $P1$=4, the slot number distribution sequence of A, B and C phases is contrary to that when P2=2, this is consistent with working principle of aforementioned brushless double feed motor rotor.

Figure 3 shows detailed wiring manner of three winding when $Z$= 6 , $P1$=4 , $P2$=2.

However, as above mentioned, the rotor windings directly based on so called "slot harmonics" theory, contains many high-order harmonics due to too less number of slots of rotor, as will result too large vibration and noise of motor. This affects its applicability. To solve this problem, more rotor slot number should be used. According to aforementioned relational expression $Z'$=$nZ$=$n(p_1+p_2)$ , determine $n$=9, then new rotor slot number $Z'$ = $nZ$ = 54 , number of phases of rotor winding is $m = Z / m_k = 3$, but the number of coils for each phase is $nm_k$=9×2.

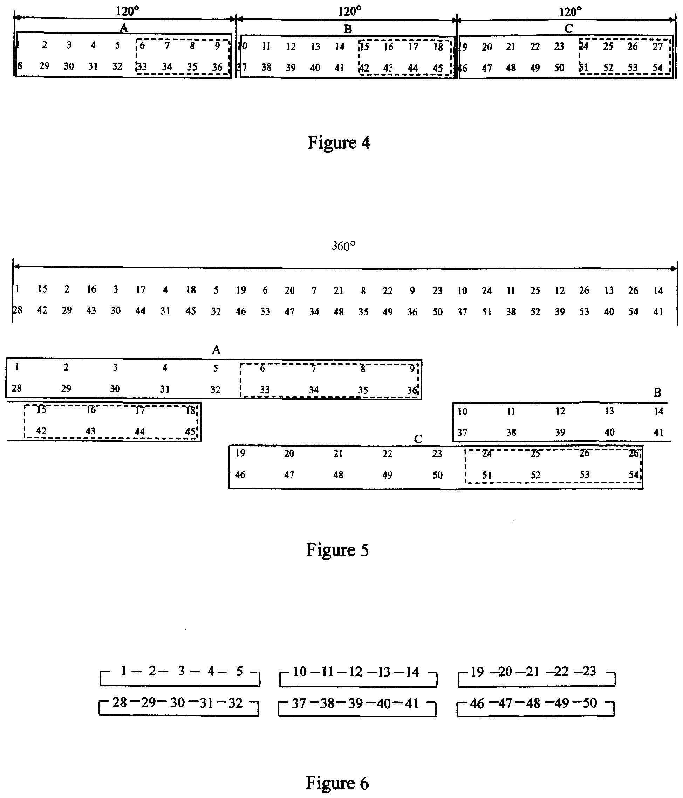

Increase slot number of rotor can greatly weaken the high-order harmonics of rotor winding magnetic force, the required fundamental wave will be weaken inevitably meanwhile. Figure 4 and figure 5 show the three phase coil slot number phase distribution when rotor slot number Z=54, when P2=2 and P1=4, from which we can see that, the winding phase band width is 120° to P2=2;, and 240° to P1=4, and winding distribution factor is greatly lower than Z=6 before slot number is increased. To improve this, it can be considered to remove some slot number at rim of phase band. For example, remove the slot number in dash frame in figure 4 or 5, then, the phase band width becomes $67°_{for}$P2=2 and 133° for P1=4, winding distribution factor is increased obviously, select appropriate coil span, in which, high-order harmonics can be removed obviously. Detailed connection mode of new winding coil after slot number is decreased is that, all coils whose slot number is neighboring in each phase windings are connected in series, then self-short-circuit connected, as shown in figure 6.

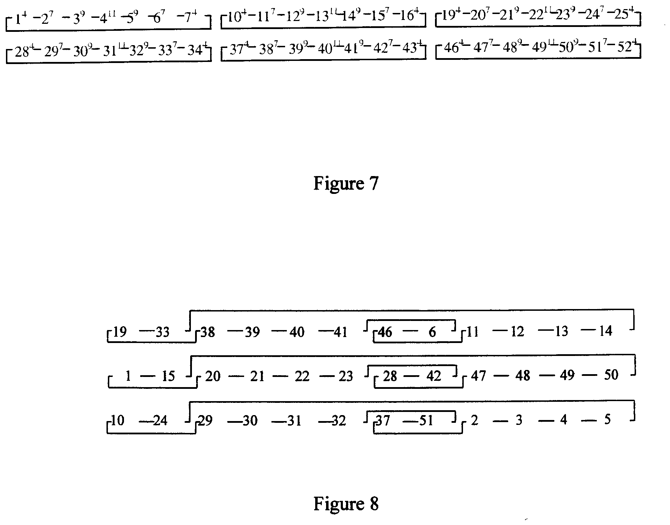

The rotor winding shown in figure 6 contains higher winding factor and lower high-order harmonics, but due to many slot numbers are removed, the utilization of conductor is lower. To improve utilization of conductor and remove the content of winding magnetic harmonics further, because the winding coils is in multiturn structure. Hence, as mentioned above, unequal turn coils can be considered. Figure 7 shows one of wiring manner for rotor winding using unequal turn coils, the superscript number for slot number in the figure shows the relative number of turns ratio.

Discard some coils or use unequal turn coils will often result in unequal rotor slot full rate, to solve this problem, the form of rotor slot can be designed as unequal-section slot shape based on rule of equal slot full rate.

This invention applies winding rotor winding, another feature of this type of winding is that, the connection between coils can be flexible according to real conditions. Figure 8 shows an embodiment not according to the invention. It shows one of rotor winding wiring method with reversed coils when Z=54 , $P1$/ $P2$=4/2 , $y$=7, the feature of this type of wiring is that, in addition to lower harmonics contents, the winding factor for P1=4 is higher, i.e., 0.9092, as for P2=2, the winding factor is 0.4546.

## Claims

1.   A wound rotor brushless doubly-fed motor, comprising:

- an air gap,
- a stator comprising a first and a second set of three-phase windings, each winding having pole pairs, wherein the pole pair number of the first set of three-phase windings is P1, and the pole pair number in the second set of three-phase windings is P2,
- a rotor comprising rotor slots distributed around the air gap and a set of multiphase windings having a plurality of phases, the number of phases being m, and having a plurality of winding coils in each phase, the winding coils having a multi-turn structure,

wherein

- adjacent winding coils belonging to the same phase are forming a group,
- the winding coils within a group are evenly spaced, but the number of turns of at least some of the winding coils is different,
- the number of rotor slots is Z', where Z' = n(P1+P2), n being a positive integer,
- if P1+P2 is odd, the number of phases m is P1+P2, and the number of winding coils in each phase is equal to or smaller than n,
- if P1+P2 is even, the number of phases m is (P1+P2)/2, and the number of winding coils in each phase is equal to or smaller than 2n, and
- all winding coils within a group are connected in series in sequence by slot number, whereafter the series connection is short circuit connected.

**2.** The motor of claim 1, wherein

- the motor rotor phase winding contains reversed coils,
- the span of each coil is equal,
- if P1+P2 is odd, the number of winding coils in each phase is smaller than n, and
- if P1+P2 is even, the number of winding coils in each phase is smaller than 2n.

**Patentansprüche**

**1.** Bürstenloser doppelt angetriebener Motor für einen Wickelrotor, umfassend:

- einen Luftspalt,
- einen Stator, umfassend einen ersten und einen zweiten Satz von Dreiphasenwicklungen, wobei jede Wicklung Polpaare aufweist, wobei die Polpaarzahl des ersten Satzes von Dreiphasenwicklungen P1 ist und die Polpaarzahl im zweiten Satz von Dreiphasenwicklungen P2 ist,
- einen Rotor, umfassend Rotornuten, die um den Luftspalt verteilt sind, und einen Satz mehrphasiger Wicklungen mit mehreren Phasen, wobei die Anzahl der Phasen m ist, und mit mehreren Wicklungsspulen in jeder Phase, wobei die Wicklungsspulen eine Multi-Turn-Struktur aufweisen, wobei
- benachbarte Wicklungsspulen, die zur gleichen Phase gehören, eine Gruppe bilden,
- die Wicklungsspulen innerhalb einer Gruppe gleichmäßig beabstandet sind, aber die Windungszahl mindestens einiger Wicklungsspulen unterschiedlich ist,
- die Anzahl der Rotornuten Z' ist, wobei Z' = n(P1+P2), wobei n eine positive ganze Zahl ist,
- wenn P1+P2 ungerade ist, die Anzahl der Phasen m gleich P1+P2 ist und die Anzahl der Wicklungsspulen in jeder Phase gleich oder kleiner als n ist,
- wenn P1+P2 gerade ist, die Anzahl der Phasen m gleich (P1+P2)/2 ist und die Anzahl der Wicklungsspulen in jeder Phase gleich oder kleiner als 2n ist, und
- alle Wicklungsspulen innerhalb einer Gruppe in der Reihenfolge der Nutennummer in Reihe geschaltet sind, wobei die Reihenschaltung kurzgeschlossen ist.

**2.** Motor nach Anspruch 1, wobei

- die Phasenwicklung des Motorrotors umgekehrte Spulen enthält,
- die Spanne jeder Spule gleich ist,
- wenn P1+P2 ungerade ist, die Anzahl der Wicklungsspulen in jeder Phase kleiner als n ist, und
- wenn P1+P2 gerade ist, die Anzahl der Wicklungsspulen in jeder Phase kleiner als 2n ist.

**Revendications**

**1.** Moteur à double alimentation sans balai à rotor bobiné, comprenant :

- un entrefer,
- un stator comprenant un premier et un deuxième ensemble d'enroulements triphasés, chaque enroulement ayant des paires de pôles, dans lequel le nombre de paires de pôles du premier ensemble d'enroulements est P1, et le nombre de paires de pôles dans le deuxième ensemble d'enroulements triphasés est P2,
- un rotor comprenant des encoches de rotor réparties autour de l'entrefer et un ensemble d'enroulements polyphasés ayant une pluralité de phases, le nombre de phases étant m, et ayant une pluralité de bobines d'enroulement dans chaque phase, les bobines d'enroulement ayant une structure à plusieurs spires, dans lequel
- des bobines d'enroulement adjacentes appartenant à la même phase forment un groupe,
- les bobines d'enroulement à l'intérieur d'un groupe sont régulièrement espacées, mais le nombre de spires de au moins certaines des bobines d'enroulement sont différentes,
- le nombre d'encoches de rotor est Z', où Z' = n(P1+P2), n étant un entier positif,
- si P1+P2 est impair, le nombre de phases m est P1+P2, et le nombre de bobines d'enroulement dans chaque phase est égal ou inférieur à n,
- si P1+P2 est pair, le nombre de phases m est (P1+P2)/2, et le nombre de bobines d'enroulement dans chaque phase est égal ou inférieur à 2n, et
- toutes les bobines d'enroulement d'un groupe sont connectées en série en séquence par numéro d'encoche, après quoi la connexion en série est connectée en court-circuit.

2.  Moteur selon la revendication 1, dans lequel

- l'enroulement de phase de rotor du moteur contient des bobines inversées,
- la portée de chaque bobine est égale,
- si P1+P2 est impair, le nombre de bobines d'enroulement dans chaque phase est inférieur à n, et
- si P1+P2 est pair, le nombre de bobines d'enroulement dans chaque phase est inférieur à 2n.

*a)*

| 360° | | | | | |
|---|---|---|---|---|---|
| 1 | -2 | 3 | -1 | 2 | -3 |
| 4 | -5 | 6 | -4 | 5 | -6 |

*b)*

| 120° | 120° | 120° |
|---|---|---|
| A | B | C |
| 1 | 3 | 2 |
| 4 | 6 | 5 |

## Figure 1

*a)*

360°

| 1 | -3 | 2 | -1 | 3 | -2 |
|---|---|---|---|---|---|
| 4 | -6 | 5 | -4 | 6 | -5 |

*b)*

| 120° | 120° | 120° |
|---|---|---|
| A | C | B |
| 1 | 2 | 3 |
| 4 | 5 | 6 |

## Figure 2

1 — 4    2 — 5    3 — 6

## Figure 3

Figure 4

Figure 5

Figure 6

$$\left[1^4 -2^7 -3^9 -4^{11} -5^9 -6^7 -7^4\right] \quad \left[10^4 -11^7 -12^9 -13^{11} -14^9 -15^7 -16^4\right] \quad \left[19^4 -20^7 -21^9 -22^{11} -23^9 -24^7 -25^4\right]$$

$$\left[28^4 -29^7 -30^9 -31^{11} -32^9 -33^7 -34^4\right] \quad \left[37^4 -38^7 -39^9 -40^{11} -41^9 -42^7 -43^4\right] \quad \left[46^4 -47^7 -48^9 -49^{11} -50^9 -51^7 -52^4\right]$$

Figure 7

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101039057 A

**Non-patent literature cited in the description**

- *Journal of Electrotechnics,* 2002, vol. 1, 7-10

- Development of a Wound Rotor Brushless Doubly Fed Machine Based on Slot MMF Harmonics. **YOU-GUANG GUO et al.** Industry Applications Society Annual Meeting. IEEE, 05 October 2008, 1-5